# EUROPEAN PATENT APPLICATION

(11) **EP 4 201 766 A1**
(43) Date of publication of application: **28.06.2023**
(21) Application number: 21217148.2
(22) Date of filing: 22.12.2021
(51) Int. Cl.: B60T 13/74

(54) **BRAKE SYSTEM FOR A COMMERCIAL VEHICLE**

(71) Applicant: Haldex Brake Products Aktiebolag, 261 24 Landskrona (SE)
(72) Inventor: FYHR, Pontus, 22653 Lund (SE)
(74) Representative: REHBERG HÜPPE + PARTNER

(57) **Abstract**

The present invention relates to a brake system (1) for a commercial vehicle. The brake system (1) comprises a wheel-end unit (3). The wheel-end unit (3) comprises a brake device (7) and a brake actuator (5). A holding device (10) is able to lock the brake actuator (5). In a locked state of the holding device (10) a level of the clamping stroke of the brake actuator (5) is maintained. Accordingly, in the locked state it is possible to decrease or remove the electric energization of the brake actuator (5) when the brake force level has to be maintained for a longer time period.

According to the invention the holding device (10) is controllable in a redundant way: In a normal operational mode (in particular a mode without any failure) the holding device (10) is controlled by an electronic control unit (12a). Instead, in a safety operational mode the holding device (10) can be controlled by another electronic control unit (12b).

## Description

### TECHNICAL FIELD OF THE INVENTION

The invention relates to a brake system for a commercial vehicle. The commercial vehicle is e.g. driven solely by electric energy, a hybrid vehicle driven both by electric energy as well as by a combustion engine or a vehicle driven by a combustion engine. To mention only some examples, the commercial vehicle might be a bus, a tractor and/or a trailer. The commercial vehicle might be driven by an autonomous driving system, in particular according to level 3, level 4 or level 5 of the international standard SAE for levels of autonomous driving. In the brake system of the commercial vehicle a brake force at at least one wheel end is generated (exclusively or cumulatively to a different type of brake device) by at least one electric brake device wherein a contact force between brake elements (in particular a brake pad and a brake disc) is controlled by an electric brake actuator.

### PRIOR ART

EP 1 302 371 A2 describes a known power supply system according to DE 197 55 050.9. In the power supply system power is supplied to an electro-motoric brake device by two redundant power sources by a common supply line. The redundant power sources guarantee that it is possible to operate the brake device also in case of a failure of one of the power sources. However, in case of a failure of the supply line (in particular a short-circuit or a rupture of the line) it is no longer possible to operate the brake device. EP 1 302 371 A2 suggests to connect the redundant power sources via redundant supply lines to electric ports of the brake device such that two separate circuits are used for supplying the brake device with electric power. The two circuits are separated by diodes. For one embodiment, a first power source is formed by a generator (e.g. with a supply voltage of 42 V) whereas the second power source is an accumulator (e.g. with a lower supply voltage of 14 V). Due to the redundant power supply, it is possible to reduce the wire cross-sectional area of the supply lines to 2/3 or to the half. In the case of using different nominal supply voltages of the power sources it is possible to transform the supply voltage to the other supply voltage by a DC/DC voltage transformer which can also be a bi-directional DC/DC transformer. When using a bi-directional DC/DC transformer, one of the two circuits can be prioritised so that a larger percentage of the supply power is supplied by this circuit. Any failure of one of the circuits can be brought to the attention of the driver by suitable acoustic or optical signal means. Also redundant control lines for controlling the operation of the electro-motoric brake device can be used.

US 2016/0072723 A1 discloses an electric drive unit including a motor having a stator with a winding wound around the stator and a rotor and a power converting device comprising a circuit for supplying electric power to the motor. The power converting device includes two power converting sections separated by a separating protrusion or wall. The power converting sections include semiconductor devices as MOSFETs used for converting a DC power input from a power source to three-phase AC power used for driving the different phases of the motor.

US 2004/0212250 A1 describes the problem that also in a redundant electric brake system problems might arise when an abnormality develops in a relay unit used for switching between the power supply from a main accumulator and an auxiliary accumulator. US 2004/0212250 A1 suggests an electric brake system with a plurality of power sources and a power breaker capable of insulating and separating a plurality of brake actuators into two separate brake system parts. Therefore, even when an abnormality develops, the brake system part wherein the abnormality occurs can be separated and the other brake system part can still be operated under use of the associated power source. For one embodiment proposed in US 2004/0212250 A1, the brake system includes a cut-off switch for dividing a power source line into a first power source line and a second power source line. A first and second voltage detection circuit detects a voltage in the associated power source line. The second power source line supplies driving power to the first voltage detection circuit, and the first power source line supplies driving power to the second voltage detection circuit. Even when an abnormality develops in the power source line, the cut-off switch cuts off the power source line. Then, the driving power is supplied from the power source line on the normal side to the voltage detection circuit that detects the voltage of the power source line on the abnormal side. Consequently, voltage detection can be continued. The cut-off state can be released as soon as an abnormality is eliminated. Furthermore, it is possible that a power breaker also includes a switch that is fused by thermal energy. Even when the cut-off switch does not operate as expected, the switch that is fused by thermal energy will be able to cut off the power source line. US 2004/0212250 A1 also suggests to use different power breakers having different current values as a power cut-off condition.

WO 2018/114275 A1 discloses an electric brake system comprising at least two electric power sources embodied as a capacitor-based power source and a recharging power source (preferably a chemical electric power source as an accumulator). These two different electric power sources have different dynamical characteristics, e.g. for fast power demands or recharging characteristics. Furthermore, the two different power sources provide different options for monitoring the charging level of the power source and involve different costs and lead to different operational safeties. A control device selectively activates one of the two different power sources according to the actual needs. A monitoring device monitors the charging level of the capacitor-based power source, in particular the voltage at the different plates of the capacitor, or monitors the flow of electric energy from the capacitor-based power source to the electric brake device or monitors the flow of electric energy from the recharging power source to the capacitor-based power source. Dependent on the result of the monitoring, a warning might be given to the driver when the charging level falls below a threshold charging level. It is possible to control the flow of energy between the power sources on the basis of the monitored charging level. Electric consumers not related to safety and to braking can be deactivated for a determined low charging level. Furthermore, the operation of the electric brake device can be adapted for a small charging level or for a charging level below a lower threshold. Here, an emergency brake actuation can be triggered for stopping the vehicle to still stand. It is possible that the monitoring device detects a failure of the capacitor-based power source and switches the power supply for the electric brake device to the supply by the recharging power source. Here, the failure of the capacitor-based power source can be detected on the basis of a fast decrease of the charging level, high currents between the capacitor plates or on the basis of an inappropriate recharging behaviour of the capacitor-based power source. For one embodiment the electric brake system can be operated in two different modes. In a higher energization mode the actuation of the electric brake actuator depends according to a given characteristic from the energization of the electric brake actuator. A higher brake application requires a higher energization of the brake actuator. Also for a constant high brake force a constant high energization of the brake actuator would be required. The publication proposes to provide a low energization mode. In the low energization mode the electric brake actuator is switched from the normal, energization-based mode for changing the brake actuation to a low energization brake holding mode, wherein the brake actuator is not energized proportional or corresponding to the characteristic for holding the brake force constant. Instead, a locking, fixing or holding device is actuated which under the consumption of a low energy level holds the previously achieved brake application at a constant level. In the case that a change of the brake application is required, the low energy mode or holding mode or fixation mode is terminated and the control logic switches back to the normal operation of the electric brake actuator, wherein the brake force again depends on the level of energization (high energization mode). The publication also proposes a recovery mode of the brake system wherein during a release of the electric brake actuators energy stored in the brake device or brake actuator can be recovered and returned to the capacitor-based power source. For one embodiment two capacitor-based power sources are associated to electric brake actuators on different vehicle sides of a respective vehicle axle. In a normal operational mode the two capacitor-based power-sources can be separated from each other and can each be responsible for the power supply for a respective wheel-end unit. Instead, in a failure mode one of the two capacitor-based power sources is connected to the electric brake actuators of both wheel-end unit. It is possible that in the electric brake system the electric brake actuator generates an actuating force which is directly or indirectly transferred to the brake element, in particular the brake pad, so that the brake force at the brake element corresponds to or is proportional or dependent by any dependency on the actuating force of the brake actuator. A transmission or brake lever can be interposed between the electric brake actuator and the brake element as the brake pad. However, it has been shown that for some embodiments it can be advantageous to use a mechanical self-enforcing mechanism in the electric brake device (here reference is made to EP1 977 134 B1 or US 2013/0008749 A1 disclosing a mechanical self-enforcing mechanism using ramps or other self-enforcing mechanisms used for brake devices according to the prior art). These self-enforcing mechanisms can be used for generating large brake forces with small actuating forces and/or for creating a non-linear force transfer characteristic between the actuation force and the brake force created by the brake element. However, also a "conventional" electric brake device can be used which comprises a plunger which is mechanically connected to a brake element as a brake pad for biasing the brake element. Any transmission units comprising a rotating brake lever and the like can be interposed between the electric brake actuator and the plunger. The publication also discloses to use a brake actuator having first and second windings. The first windings can (in particular during normal operating states) be supplied with power by the first capacitor-based power source. If there is an abnormality of the supply of the first windings from the first capacitor-based power source, the second capacitor-based power source or the recharging power source can be activated. In this case, the second capacitor-based power source or the recharging power source supplies the second windings of the electric brake actuator with power. Here, the different windings can be dimensioned specifically for the different operating conditions, namely the first windings for the normal operating states and the second windings for the abnormal operating states (e.g. for an emergency brake actuation, a parking of the vehicle and the like). Instead of an embodiment like this wherein the different windings are not used together in one and the same operating state it is also possible that in a "burst mode" the different windings of the electric brake actuator are energized at one and the same time so that the effects and the forces generated by these windings sum up. Here, it is possible that the two windings are powered by one and the same capacitor-based power source or that the windings are powered by different capacitor-based power sources.

### OBJECT OF THE INVENTION

It is the object of the present invention to provide a brake system for a commercial vehicle which is improved in particular with respect to
- the safety in the case of a failure in the brake system and/or
- the provision and/or controllability of the brake force also in the case of a failure and/or
- the control of the operating state of a holding device and/or
- the provision of electric power for operating the brake system also in the case of a failure, in particular a power breakdown, and/or
- the provision of the driving stability and/or
- the provision of a safe parking.

### SOLUTION

According to the present invention, the object of the invention is solved by the features of the independent claim. Additional preferred embodiments according to the invention are to be seen in the dependent claims.

### DESCRIPTION OF THE INVENTION

The present invention in particular relates to a brake system for a commercial vehicle which comprises a first wheel-end unit and a second wheel-end unit. A wheel-end unit is directly attached to a vehicle wheel or its brake disc on one side of the vehicle or might be arranged adjacent to the wheel (preferably with a distance from the wheel center axis of less than 2.0 m or less than 1.0 m or even less than 0.5 m) or at the wheel end. The wheel-end unit might be fixed to an axle body, to the chassis or to a brake caliper.

The wheel-end units each comprise a brake device which generates a brake force dependent on a clamping stroke. Without this necessarily being the case, the brake system might generally be embodied as described in the prior art documents mentioned in the beginning. The brake device might e. g. be a disc brake device comprising a brake disc and brake pads pressed against the brake disc for generating the brake force. The brake device might comprise any transmission (as e. g. a spindle drive for driving the brake pads or a brake lever). In the brake device the clamping stroke which induces the brake force might be (a level of) an actuating force. However, preferably the brake stroke is a displacement of one of the components arranged in the transmission chain of the brake disc for actuating the brake element(s), in particular the brake pads.

The brake units comprise a brake actuator which induces the clamping stroke of the brake device. Here, the induced clamping stroke depends on an electric energization of the brake actuator.

Furthermore, the wheel-end units comprise a holding device.

The holding device in a locked state of the same serves for maintaining a clamping stroke which has been induced by an electric energization of the brake actuator so that it is possible to decrease or even completely remove the electric energization of the brake actuator. For the prior art mentioned in the beginning, here in particular WO 2018/114275 A1, the locked state was proposed for providing a "low energy mode". Within the present invention the holding device might also serve for providing a "low energy mode". It is also possible that by one brake device kept at a constant brake level by the holding device in the locked state a "base level" of a brake force component of the vehicle can be provided whereas (e.g. by another brake actuator and another brake device at another wheel end) an additional constant or dynamic or modulated brake force component of the vehicle can be provided (without an associated holding device of the other brake actuator being present or being in the locked state) so that different brake units provide different functions: a first brake unit with its holding device in the locked state provides a constant brake force component (constant base level) and the other second brake unit without a holding device being in a locked state provides a changing or even modulated brake force component of the vehicle. To mention another non-limiting example the brake unit with the holding device in a locked state might serve for providing a stopping brake force when the vehicle is temporarily stopped (e.g. at the traffic lights or another temporary stop) or this brake unit serves for providing a parking force (which might be induced manually by the driver or automatically by a vehicle control system or an autonomous driving system). It is also possible that the brake unit with the holding device in the locked state maintains an emergency brake force for bringing the vehicle to stop in the case of a failure or an emergency.

Within the frame of the invention there are a lot of options for the design of the holding device. Preferably, the holding device fixes a position of one component in the transmission chain comprising the brake actuator and the brake device for creating the brake force. To mention only some non-limiting examples the holding device might be embodied as a holding disc brake which in a locked state locks a rotatable component of the drive train by braking (e.g. locks an electric shaft, disc or gearwheel of the electric motor or of a transmission element against the fixed housing). The holding device might be based on fixing the component by friction (as being the case for a holding disc brake). However, the fixing might also be provided by a latching or locking. It is e.g. possible that the electric motor or a transmission component comprises a toothed wheel and the holding device in the locked state engages the toothed wheel with a latching or locking element for blocking a rotation of the toothed wheel. The holding device might fix the position in the locked state in a stepped fashion (e.g. as explained by use of the toothed wheel) or in a stepless fashion (as being the case for the example of the holding disc brake).

The wheel-end units might comprise an electronic control unit. The electronic control unit controls the electric energization of the brake actuator of the wheel-end unit. The control unit comprises control logic for providing this control and for providing further optional functions as mentioned in the following.

In the wheel-end unit the brake device, the brake actuator, the holding device and/or the electronic control unit might be integrated into a common housing. However, it is also possible, that the brake device, the brake actuator, the holding device and/or the electronic control unit are embodied as modules which are flanged to each other.

The inventive brake system might comprise an axle control module. The axle control module is connected both to the first wheel-end unit and to the second wheel-end unit for providing a data exchange and/or for controlling the wheel-end units. The axle control module might furthermore communicate with axle control modules of another axle of the commercial vehicle and/or the axle control module might communicate with a central control module and/or an autonomous vehicle driving system and/or a cruise control unit.

The invention in particular bases on the finding that in the case that the control of the first holding device is no longer possible due to a failure of the first electronic control unit the holding device might unintendedly be locked. In the locked state of the holding device the wheel-end unit and its brake device can no longer be controlled for providing a controllable brake force and/or an unintended brake force is upheld. On the basis of this finding, the invention suggests a redundant control of the first holding device: In a normal operational mode the first holding device is controlled by the first electronic control unit of the wheel-end unit. However, in a case of a failure effecting the control by the first electronic control unit a safety operational mode is automatically triggered. In the safety operational mode the first holding device is controlled by another electronic control unit. The above might only apply for the first holding device whereas the second holding device does not have a redundant control. However, preferably the above also applies for the second holding device.

The other electronic control unit allowing the redundant control of the holding device might be a specific electronic control unit exclusively responsible for the redundant control. It is e. g. possible that the wheel-end unit comprises the electronic control unit used in the normal operational mode as well as the other electronic control unit used in the safety operational mode. Here, the first electronic control unit and the other electronic control unit can be embodied separately. It is even possible that the first electronic control unit and the other electronic control unit are embodied on one and the same printed circuit board.

However, for a preferred first variant of the invention the other electronic control unit is the second electronic control unit of the second wheel-end unit. Accordingly, the second electronic control unit is used in a multifunctional way: Here, the second electronic control unit operates the second holding device in the normal operational mode of the second wheel-end unit. Furthermore, in the case of a failure effecting the first electronic control unit or first wheel-end unit the second electronic control unit is responsible in the safety operational mode for controlling the first holding device. The same might apply vice versa so that the first electronic control unit is used in a safety operational mode of the second wheel-end unit for controlling the second holding device.

For a second variant of the invention the other electronic control unit is an electronic control unit of the axle control module. Accordingly, in this case the electronic control unit of the axle control module can be used in a multifunctional way: The electronic control unit of the axle control module in this case controls and coordinates the actuation of the two wheel-end units. Furthermore, in a failure of the control of the first holding device [or respectively of the second holding device] by the first electronic control unit [or the second electronic control unit] the electronic control unit of the axle control module also provides the electronic control of the first holding device [or the second holding device].

For the control strategy of the holding device by the other electronic control unit in the safety operational mode there are a lot of different options. For one proposal of the invention, in the safety operational mode the first holding device is controlled into the unlocked state which allows that a previously induced brake force of the brake device associated with the first holding device is also released which might allow that a control of the brake force of the commercial vehicle by the other wheel-end units is still positive without a negative impact of a locked first holding device a first wheel-end unit.

Another aspect of the invention relates to the power supply for the wheel-end units. Here, the invention suggest that the brake system comprises one or two power sources. Here, it is possible that the at least one power source is supplied or charged with electric power by a main power supply. The at least one power source serves for supplying electric power to the first wheel-end unit, the second wheel-end unit and/or the axle control module (in particular to the associated electronic control unit for controlling the first holding device in the safety operational mode). The supplied power might e. g. serve for actuating the brake actuators and for allowing the execution of the control logic by the different electronic control units and the operation of the same. The supply of electric power by a second power source can be used in a safety operational mode wherein there is a failure of the first power source. The failure here might be that the first power source breaks down or that there is at least a reduction of the charging level, the supplied voltage or the current of the first power source below a threshold. For one embodiment of the invention it is alternatively or cumulatively possible that in the case of a failure of the first and/or second power source the power supply is switches to the main power supply.

For the type of power source there are a lot of options. The power source might e. g. be a chemical accumulator. However, for a preferred embodiment of the invention the power source is a capacitor.

Here, any type of capacitor might be used, in particular a so-called super-capacitor or ultra-capacitor. The capacitor might be formed by a single couple of capacitor plates or by a package of a plurality of single sub-capacitors. To mention only one non-limiting example, the sub-capacitors might be capacitors of the type distributed under the label "Maxwell BCAP 0310" having a voltage per cell of 2.7V, 309.96 Farad per cell, an energy of 1129.804 J per cell, an energy of 0.313835 Wh per cell and a weight per cell of 60 g. At least five, at least ten, at least fifteen or at least twenty cells of this or another type can be used as sub-capacitors of the capacitor.

One power source can be connected only to one associated wheel-end unit for providing the redundant power supply for this wheel-end unit, in particular the electronic control unit of this wheel-end unit. However, the power source might also be used in a redundant fashion for providing the power to both the first wheel-end unit and the second wheel-end unit.

The invention also suggests that the power sources are embodied as a first capacitor and a second capacitor. Here, the first capacitor might supply electric power for unlocking the first holding device in the safety operational mode whereas the second capacitor supplies electric power for unlocking the second holding device in the safety operational mode.

For the type of controlling of the holding device in the safety operational mode the invention covers a number of options. For one option, in the safety operational mode the one power source of the axle control module is connected by a switch to the first holding device. In this case, the switch might also be integrated into the axle control module. The switch is controlled by the electronic control unit of the axle control module so that when the axle control module detects a failure and activates the safety operational mode the electronic control unit switches the switch into a state allowing the power supply by one of the power sources to the first holding device. Here, the control of the switch by the electronic control unit also covers a control wherein in the normal operational mode the switch is energized by the electronic control unit for closing the switch whereas the failure leads to the result that the control signal by the electronic control unit drops which switches the switch into the open position.

For another proposal of the invention the brake system comprises a failure classification circuitry which might be integrated into the wheel-end unit or into the axle control unit. The failure classification circuitry classifies an existing failure in the brake system into a first failure category or a second failure category. Here, the control of the first holding device depends on the classification of the detected failure: The safety operational mode is only activated if the existing failure is classified in the first failure category.

For an alternative embodiment the safety operational mode is activated independent on the classified category of the failure. However, in this case, in the safety operational mode the other electronic control unit only unlocks the first holding device if the existing failure is classified in the first failure category.

These embodiments of the invention in particular base on the finding that failures in a first failure category might be critical for providing the driving safety, for providing the required brake force and/or for providing stable driving and braking conditions. For failures in the first failure category no further safe control of the first wheel-end unit might be possible. Instead, for failures of the second failure category the second wheel-end unit might still be able to provide the required (constant or changing) brake force with the full functionality or a reduced functionality or is still able to provide a reduced brake force above a threshold level. It might also be possible that for a failure of the second failure category the brake force can only be provided by the first wheel-end unit with a slower response or dynamic. In the case of a failure in the second failure category other measures than influencing the state of the holding device can be taken. It is e. g. possible that in this case a warning (an acoustic warning and/or an optical warning) is given to the driver.

The invention covers a number of options for the way how the failure classification circuitry determines the failure categories. To mention only some non-limiting examples the failures can be distinguished between the first failure category and the second failure category on the basis of different failure types or different types of failure signals. It is e. g. possible that the failure categories correspondent to different failure qualities. If e. g. a power source or main power supply, a supplied voltage or a current is no longer available, the failure can be classified in the first failure category. However, in the case that a wheel speed signal, a steering angle signal, a measured brake force signal and the like is no longer available, the failure might be classified in the second failure category. However, it is (alternatively or cumulatively) also possible that the classification bases on a more quantitative analysis. Accordingly, in the case that a power source level, a supply voltage, a current, a control current or a power level of a power source drops below a critical threshold the failure is classified in the first failure category whereas otherwise the failure is classified in the second failure category. Another option for the classification is that the classification bases on a comparison of or the ratio of
- the measured vehicle or wheel deceleration, the clamping force or brake force of the wheel-end unit or of the whole brake system.
- and the brake request (set by the driver or an autonomous vehicle driving system or a cruise control).

In the case that the correlation or ratio is within a predefined interval or above a threshold the failure might be a non-critical failure so that the failure is classified in the second failure category
- otherwise the failure is classified in the first failure category.

In practice, the classification might be based on a plurality of conditions and states wherein it is also possible that the classification bases both on a qualitative analysis of the failure as well as on a quantitative analysis.

For one embodiment of the inventive brake system the safety operational mode is only activated if both a failure in the brake system is detected as well as a monitored speed is above a speed threshold. For an alternative embodiment the safety operational mode is activated for any failure or a failure in a certain failure category. However, in this case, in the safety operational mode the other electronic control unit only unlocks the first holding device if both a failure in the brake system is detected as well as the monitored speed is above a speed threshold.

The speed might be the wheel speed of a vehicle wheel associated with the wheel-end unit, the speed of the brake disc or of a tone wheel of the wheel-end unit or the speed of the vehicle. The consideration of the speed bases on the finding that in some cases the locking of the holding device due to the failure can be accepted when the vehicle is at a low speed so that a level of the brake force of the brake unit has no negative effects on the driving stability. Instead, for a speed above the speed threshold the inventive measures of guarantying the unlocked state of the holding device will be used.

For an extreme case, the speed threshold might be the zero threshold. For this embodiment the transfer of the holding device into the unlocked state is avoided in a parking situation or stop situation with a zero speed. When the wheel-end unit serves for providing the parking brake force or a still stand brake force and there is a failure in the brake system, in this situation the automatic transfer of the holding device into the unlocked state might cause problems because in the unlocked state the required parking brake force or still stand brake force can no longer be guaranteed.

For another proposal of the invention, the brake system comprises a brake mode detection circuitry. The brake mode detection circuitry monitors if the brake system is in a service brake mode or in a parking brake mode. In the case that a failure is detected the safety operational mode is only activated if the brake system is in the service brake mode.

For an alternative embodiment in the case of the failure or of a failure in a certain failure category the safety operational mode is activated. However, in the safety operational mode the other electronic control unit only unlocks the first holding device if the brake system is in the service brake mode. Accordingly, in the service brake mode the brake force of the wheel-end unit is not locked.

For a different embodiment in the service brake mode the wheel-end unit may be locked during steady state breaking. Instead, when unlocking the holding device the brake force of the wheel-end unit can be changed and in particular the wheel-end unit can be transferred into the non-braked state. This is in particular the case during driving of the commercial vehicle which might also cover a temporary stop e. g. at traffic lights. However, in the case that the brake system is in the parking brake mode, the locked state of the holding device can be maintained so that the parking brake force is not affected and a safe parking can be provided.

The brake mode detection circuitry might determine the service brake mode and the parking brake mode on the basis of a speed sensor. Alternatively or cumulatively, the brake mode detection circuitry might detect a parking brake mode on the basis of an ignition switch, a driver seat occupancy sensor, on the basis of the detection that the vehicle door is opened, on the basis of a parking brake switch and the like.

Advantageous developments of the invention result from the claims, the description and the drawings.

The advantages of features and of combinations of a plurality of features mentioned at the beginning of the description only serve as examples and may be used alternatively or cumulatively without the necessity of embodiments according to the invention having to obtain these advantages.

The following applies with respect to the disclosure - not the scope of protection - of the original application and the patent: Further features may be taken from the drawings, in particular from the illustrated designs and the dimensions of a plurality of components with respect to one another as well as from their relative arrangement and their operative connection. The combination of features of different embodiments of the invention or of features of different claims independent of the chosen references of the claims is also possible, and it is motivated herewith. This also relates to features which are illustrated in separate drawings, or which are mentioned when describing them. These features may also be combined with features of different claims. Furthermore, it is possible that further embodiments of the invention do not have the features mentioned in the claims which, however, does not apply to the independent claims of the granted patent.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with respect to preferred exemplary embodiments illustrated in the drawings.

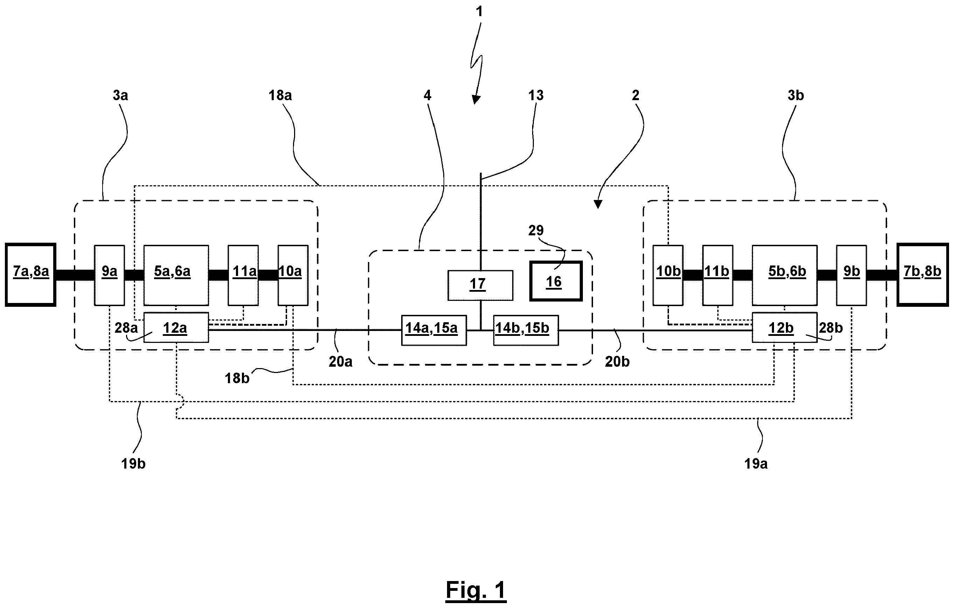

- **Figs. 1 to 2**: schematically show a brake system for a commercial vehicle, here related with a single axle of the commercial vehicle.

### DESCRIPTION OF THE DRAWINGS

In the description of the Figures for components having the same or similar designs and/or providing the same or similar functions in some cases the same reference number is used. In this case, the different components are distinguished from each other by the additional letter a), b)... In this case, reference can be made to these components in the specification and/or claims with or without use of the additional letter which then refers to one, a number or all of the components labeled with the reference number.

**Fig. 1** shows a brake system 1, here a sub-system of the whole brake system of a commercial vehicle, the sub-system being related with one axle 2 of the commercial vehicle.

The brake system 1 comprises a first wheel-end unit 3a and a second wheel-end unit 3b. The wheel-end unit 3a is connected to a left wheel of the axle 2 whereas the wheel-end unit 3b is connected to a right wheel of the axle 2. Furthermore, the brake system 1 comprises an axle control module 4. The axle control module 4 is here embodied separately from the wheel-end units 3. The axle control module 4 might e. g. be arranged centrically on the axle 2 between the wheel-end units 3. However, it is also possible that the axle control module 4 is arranged remote from the axle 2 and/or attached to or integrated into one of the wheel-end units 3. The wheel-end units 3 each comprise a brake actuator 5 which is in particular embodied as an electric motor 6. The brake actuator 5 actuates a brake device 7 which is in particular embodied as a disc brake 8. For the shown embodiment the brake device 7 is embodied separately from the wheel-end units 3. It is possible that the brake device 7 is flanged to the wheel-end unit 3 and/or an integral part of the wheel-end unit 3. A force sensor or clamping stroke sensor 9 measures the brake force or actuation force or clamping stroke of the wheel-end unit 3.

The wheel-end units 3 each comprise a holding device 10. The holding device 10 serves for fixing, latching or locking a clamping stroke of the brake actuator 5, a component of a transmission of the transmission chain between the brake actuator 5 and the brake device 7 or a component of the brake device 7. For one embodiment the holding device 10 is attached to or integrated into the electric motor 6. In this case, the holding device 10 blocks a rotational position of a motor shaft of the electric motor 6. Here, the holding device 10 comprises a holding brake which brakes the motor shaft of the electric motor 6 against the housing.

For the shown embodiment, a sensor 11 of the wheel-end unit 3 senses the state of the holding device 10, in particular the locked state respectively the unlocked state of the holding device 10.

The wheel-end units 3 each comprise electronic control units 12.

The axle control module 4 is connected to a main power supply 13 of the commercial vehicle. The axle control module 4 comprises power sources 14a, 14b, here embodied as capacitors 15. The axle control module 4 comprises an electronic control unit 16. In a here not shown fashion the electronic control unit 16 might communicate with other axle control modules and/or a central control unit and/or an autonomous vehicle driving system or a cruise control. The electronic control unit 16 in a way not shown and described here controls the operation of and coordinates the operation of the wheel-end units 3.

For the embodiment shown the power sources 14 are connected to the main power supply 13 via a DC/DC-converting unit 17.

In the wheel-end units 3 the brake actuator 5 is controlled by the electronic control unit 12. The control might base on operational data transmitted to the wheel-end unit 3 via a signal line or a data bus. Furthermore, the control of the brake actuator 5 by the electronic control unit 12 might depend on control signals or settings by the axle control module 4, here in particular the electronic control unit 16.

Furthermore, in the wheel-end units 3 the electronic control units 12 control the operation of the holding devices 10 so that the electronic control unit is able to transfer the holding device 10 into the locked state and into the unlocked state according to the needs. For the control of the holding device 10 the signal of the sensor 11 is transmitted to the electronic control unit 12. By a control line 18 the electronic control unit 12a of the first wheel-end unit 3a is connected to the holding device 10b of the second wheel-end unit 3b. Furthermore, it is possible that the signal of the brake force sensor or clamping stroke sensor 9b of the second wheel-end unit 3b is transmitted by a signal line 19a to the electronic control unit 12a of the wheel-end unit 3a. The same applies vice versa for the connections of the electronic control unit 12b of the second wheel-end unit 3b (cp. Fig. 1).

The power sources 14 of the axle control module 4 are connected to the electronic control units 12 of the wheel-end units 3 by power lines 20. For the embodiment shown in Fig. 1 the power supplied by the main power supply 13 is transmitted to the wheel-end units 3 via the DC/DC-converting unit 17 and the power sources 14 in a series connection. Here, the power sources 14 might form a kind of buffer so that in the case of a drop of power at the main power supply 13 the power sources 14 are (at least for a time span defined by the capacity of the power source 14) still able to provide power for the operation of the wheel-end units 3.

The brake system 1 of Fig. 1 can be operated as follows:
In the normal operational mode the wheel-end units 3 are powered by the power sources 14. The electronic control units 12 of the wheel-end units 3 control the brake actuators 5 and the holding devices 10 according to the needs. For changing a brake force the holding device 10 is transferred into the unlocked state and the brake actuator 5 is energized for inducing the required clamping stroke and the required brake force. In the case that an induced brake force (or also a zero brake force) or the related brake stroke has to be maintained at a constant level, the holding device 10 can be transferred from the unlocked state into the locked state. The resulting locking of the wheel-end unit 3 by the holding device 10 can be used for reducing or completely removing the energization of the brake actuator 5 by the electronic control unit 12.

Furthermore, in the case that for example the electronic control unit 12a of the wheel-end unit 3a has a failure there is the danger that the electronic control unit 12a is no longer able to change the state of the holding device 10a. Accordingly, there is the danger that the holding device 10a is held in the locked state leading to the maintenance of a previously induced brake force which might be undesired. In this case, it is possible that the electronic control unit 12b of the second wheel-end unit 3b takes over so that the electronic control unit 12b controls the holding device 10a via the control line 18b. Here, the control by the electronic control unit 12b might also consider the signal from the brake force sensor or clamping stroke sensor 9a of the wheel-end unit 3a transmitted via the signal line 19b. (The same might apply vice versa in the case of a failure of the electronic control unit 12b of the second wheel-end unit 3b.)

For this embodiment the two power sources 14 are preferably separated from each other so that an uncharging of the power source 14a does not lead to an uncharging of the other power source 14b via the first mentioned power source 14a. In this case, the uncharging of the first mentioned power source 14a would have the undesired result that it is no longer possible to operate the associated wheel-end unit 3a. However, in this case it is still possible to unlock the holding device 10a of the wheel-end unit 3a via the wheel-end unit 3b and its electronic control unit 12b.

For the embodiments shown in the following Figures generally the above mentioned also applies.

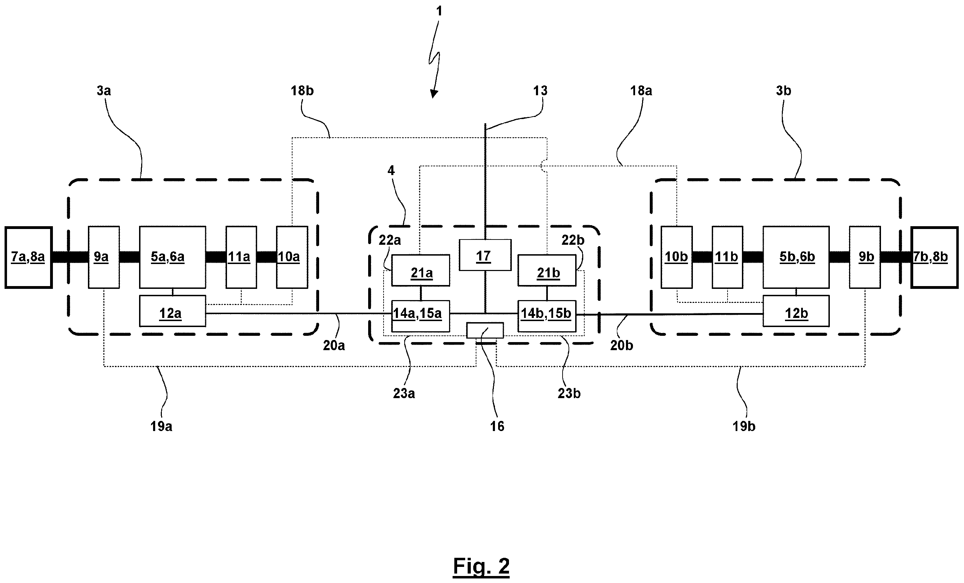

For the embodiment shown in **Fig. 2** the redundant control of the holding devices 10 is not provided by the electronic controls units 12 of the wheel-end units 3. Instead, the redundant control is provided by the electronic control unit 16 of the axle control module 4. Here, the signal of the brake force sensor or clamping stroke sensor 9 is transmitted via signal lines 19 to the electronic control unit 16 of the axle control module 4. In this case the power sources 14a [respectively 14b] being responsible for the power supply of an associated wheel-end unit 3a [respectively 3b] are connected by a control line 18a [respectively 18b] to the holding device 10b [respectively 10a] of the other wheel-end unit 3b [respectively 3a]. A switch 21 is integrated into the control line 18. The switch 21 comprises a control port 22 biased via a control line 23 by a control signal of the electronic control unit 16.

The brake system 1 of Fig. 2 can be operated as follows:
In the normal operational mode the operation corresponds to the operation described for the embodiment of Fig. 1.

In the case of a failure of the power supply by the power source 14a and/or a failure of the electronic control unit 12a of the wheel-end unit 3a the electronic control unit 16 of the axle control module 4 generates a control signal on the control port 22b of the switch 21b such that electric power from the power source 14b is transmitted to the holding device 10a for transferring the holding device 10a into the unlocked state for allowing that the brake device 7a is released. The same vice versa might apply when there is a failure in the power source 14b and/or the electronic control unit 12b.

For one embodiment the switches 21 are embodied as transistors.

For the above described embodiment the energized control state of the holding device 10 corresponds to the unlocked state whereas in the non-energized state the holding device 10 is in the locked state. However, the invention also covers embodiments wherein the switching strategy of the holding device 10 is inverted such that the holding device 10 is in the unlocked state when not energized whereas the holding device 10 is switched into the locked state with an energization of the same. It is also contemplated that the holding device can be a bi-stable holding device, which is energized to switch from one state to the other, but which requires no energization for maintaining its given state.

It is possible that the DC/DC-converting unit 17 supplies both power sources 14 via diodes. If there is a short-circuit impacting one of the power sources 14a, the power supply via the DC/DC-converting unit 17 might be lost. However, there is still electric power in the other power source 14b for emergency braking. For an alternative it is also possible to use two separate DC/DC-converting units for connecting the two power sources 14 to the main power supply 13.

The brake system 1 might comprise a failure classification circuitry 28 for providing the failure classification as described in the beginning. As an example in Fig. 1 failure classification circuitries 28a, 28b are optionally integrated into the electronic control units 12a, 12b. However, it is also possible that the failure classification circuitry 28 is integrated into one of any electronic control unit 12, 16 of the different embodiments or also into another electronic control unit.

The brake system 1 might additionally or alternatively comprise a brake mode detection circuitry 29 for providing the functionality described in the beginning. For one non-limiting example the brake mode detection circuitry 29 is integrated into the electronic control unit 16 of the embodiment of Fig. 2. However, the brake mode detection circuitry 29 might also be provided by any other electronic control unit 12, 16 shown in the embodiments or might be integrated into any other electronic control unit or circuitry.

### LIST OF REFERENCE NUMERALS

- 1: brake system
- 2: axle
- 3: wheel-end unit
- 4: axle control module
- 5: brake actuator
- 6: electric motor
- 7: brake device
- 8: disc brake
- 9: brake force sensor, clamping stroke sensor
- 10: holding device
- 11: sensor
- 12: electronic control unit
- 13: main power supply
- 14: power source
- 15: capacitor
- 16: electronic control unit
- 17: DC/DC converting unit
- 18: control line
- 19: signal line
- 20: power line
- 21: switch
- 22: control port
- 23: control line
- 28: failure classification circuitry
- 29: brake mode detection circuitry

## Claims

1. A brake system (1) for a commercial vehicle, the brake system (1) comprising a wheel-end unit (3) associated with a wheel of an axle (2), the wheel-end unit (3) comprising
a) a brake device (7) which generates a brake force dependent on a clamping stroke,
b) a brake actuator (5) which increases and decreases the clamping stroke of the brake device (7) dependent on an electric energization,
c) a holding device (10) which in a locked state maintains a level of the clamping stroke which has been induced by the brake actuator (5) when the electric energization of the brake actuator (5) is at least decreased, and
d) an electronic control unit (12) which controls the electric energization of the brake actuator **characterized in that**
e) the holding device (10) is controllable
ea) by the electronic control unit (12) in a normal operational mode and
eb) another electronic control unit in a safety operational mode.

2. The brake system (1) of claim 1, the brake system (1) comprising
a) a first wheel-end unit (3a) associated with a first wheel of an axle (2), the first wheel-end unit (3a) comprising
aa) a first brake device (7a) which generates a first brake force dependent on a first clamping stroke,
ab) a first brake actuator (5a) which increases and decreases the first clamping stroke of the first brake device (7a) dependent on a first electric energization,
ac) a first holding device (10a) which in a locked state maintains a level of the first clamping stroke which has been induced by the first brake actuator (5a) when the first electric energization of the brake actuator (5a) is at least decreased and
ad) a first electronic control unit (12a) which controls the first electric energization of the first brake actuator (5a), and
b) a second wheel-end unit (3b) associated with a second wheel of an axle (2), the second wheel-end unit (3b) comprising
ba) a second brake device (7b) which generates a second brake force dependent on a second clamping stroke,
bb) a second brake actuator (5b) which increases and decreases the second clamping stroke of the second brake device (7b) dependent on a second electric energization,
bc) a second holding device (10b) which in a locked state maintains a level of the second clamping stroke which has been induced by the second brake actuator (5b) when the second electric energization of the brake actuator (5b) is at least decreased and
bd) a second electronic control unit (12b) which controls the second electric energization of the second brake actuator (5b),
c) the first holding device (10a) being controllable
ca) by the first electronic control unit (12a) in the normal operational mode and
cb) by the second electronic control unit (12b) in the safety operational mode.

3. The brake system (1) of claim 1, the brake system (1) comprising
a) a first wheel-end unit (3a) associated with a first wheel of an axle (2), the first wheel-end unit (3a) comprising
aa) a first brake device (7a) which generates a first brake force dependent on a first clamping stroke,
ab) a first brake actuator (5a) which increases and decreases the first clamping stroke of the first brake device (7a) dependent on a first electric energization,
ac) a first holding device (10a) which in a locked state maintains a level of the first clamping stroke which has been induced by the first brake actuator (5a) when the first electric energization of the brake actuator (5a) is at least decreased and
ad) a first electronic control unit (12a) which controls the first electric energization of the first brake actuator (5a),
b) a second wheel-end unit (3b) associated with a second wheel of an axle (2), the second wheel-end unit (3b) comprising
ba) a second brake device (7b) which generates a second brake force dependent on a second clamping stroke,
bb) a second brake actuator (5b) which increases and decreases the second clamping stroke of the second brake device (7b) dependent on a second electric energization,
bc) a second holding device (10b) which in a locked state maintains a level of the second clamping stroke which has been induced by the second brake actuator (5b) when the second electric energization of the brake actuator (5b) is at least decreased and
bd) a second electronic control unit (12b) which controls the second electric energization of the second brake actuator (5b), and
c) an axle control module (4) connected both to the first wheel-end unit (3a) and the second wheel-end unit (3b) for a data exchange and/or a power control of and/or for controlling the first wheel-end unit (3a) and/or the second wheel-end unit (3b),
d) the first holding device (10a) being controllable
da) by the first electronic control unit (12a) in the normal operational mode and
db) by an electronic control unit (16) of the axle control module (4).

4. The brake system (1) of one of the preceding claims, **characterized in that** in the safety operational mode the first holding device (10a) is controlled into the unlocked state.

5. The brake system (1) of claim 3 or 4, **characterized in that** electric power is supplied to the first wheel-end unit (3a), the second wheel-end unit (3b) and/or the axle control module (4) by at least one power source (14), the at least one power source (14) in particular being connected to or charged by a main power supply (13).

6. The brake system (1) of claim 5, **characterized in that** the at least one power source (14) is a capacitor (15).

7. The brake system (1) of claim 6, **characterized in that** the power sources (14) comprise
a) a first capacitor (15a) which supplies electric power for unlocking the first holding device (10a) in the safety operational mode and
b) a second capacitor (15b) which supplies electric power for unlocking the second holding device (10b) in the safety operational mode.

8. The brake system (1) of one of claims 5 to 7, **characterized in that** in the safety operational mode the at least one power source (14) of the axle control module (4) is connected by a switch (21) to the first holding device (10a), the switch (21) being controlled by the electronic control unit (16) of the axle control module (4).

9. The brake system (1) of one of the preceding claims, **characterized in that**
a) a failure classification circuitry (28) is provided which classifies an existing failure into a first failure category or a second failure category and
b) the safety operational mode is only activated or in the safety operational mode the other electronic control unit (12b; 16) only unlocks the first holding device (10a) if the existing failure is classified in the first failure category.

10. The brake system (1) of one of the preceding claims, **characterized in that** the safety operational mode is only activated or in the safety operational mode the other electronic control unit (12b; 16) only unlocks the first holding device (10a) if both a failure in the brake system (1) is detected as well as a monitored speed is above a speed threshold.

11. The brake system (1) of one of the preceding claims, **characterized in that**
a) the brake system (1) comprises a brake mode detection circuitry (29) which monitors if the brake system (1) is in
aa) a service brake mode or
ab) a parking brake mode and
b) the safety operational mode is only activated or in the safety operational mode the other electronic control unit (12b, 16) only unlocks the first holding device (10a) if the brake system (1) is in the service brake mode.
